# EUROPEAN PATENT APPLICATION

(11) **EP 4 736 994 A1**
(43) Date of publication of application: **06.05.2026**
(21) Application number: 25210357.7
(22) Date of filing: 22.10.2025
(51) Int. Cl.: B01D 67/00, B01D 69/12, B01D 71/02

(54) **CERAMIC HOLLOW FIBER MEMBRANE COATED WITH NANO-GRAPHITE AND METHOD FOR PREPARING SAME**

(30) Priority: 05.11.2024 KR 20240154933
(71) Applicant: Ewha University-Industry Collaboration Foundation, Seoul 03760 (KR)
(72) Inventor: PARK, Chanhyuk, 03304 SEOUL (KR); KIM, Soyoun, 10450 GYEONGGI-DO (KR); KIM, Hyeyool, 06321 SEOUL (KR); JEONG, Yebin, 06704 SEOUL (KR)
(74) Representative: ZBM Patents - Zea, Barlocci & Markvardsen

(57) **Abstract**

The present disclosure relates to a ceramic hollow fiber membrane coated with nano graphite and a method for preparing the same and more particularly, to a coated ceramic hollow fiber membrane including a hollow tubular ceramic support with pores; and a coating layer disposed on an outer peripheral surface of the ceramic support and the coating layer is a nano graphite coating layer coated with a nano graphite and a method for preparing the same. According to the present disclosure, a ceramic hollow fiber membrane for water treatment coated with a nano graphite forms a nano graphite coating layer to have a lower decline rate of a filtration amount to continuously maintain the filtration performance. Further, as compared with an uncoated ceramic hollow fiber membrane, an ion removal performance, for example, fluoride removal performance is more excellent and the coating cost is low to have an economical coating layer. Therefore, a ceramic hollow fiber membrane for water treatment which is coated with a nano graphite having further improved filtration performance may be provided.

## Description

### CROSS-REFERENCE TO RELATED APPLICATIONS

This application claims the priority of Korean Patent Application No. 10-2024-0154933 filed on November 05, 2024, in the Korean Intellectual Property Office, the disclosure of which is incorporated herein by reference.

### BACKGROUND

### Field

The present disclosure relates to a ceramic hollow fiber membrane and a method for preparing the same, and more particularly, to a coated ceramic hollow fiber membrane for water treatment and a method for preparing the same.

### Description of the Related Art

In accordance with the development of the industry, the harmful effects of hazardous materials, such as dust, soot, waste gases, smoke, and volatile organic chemicals generated from each industrial process are increasing. Accordingly, some uses polymer filters to suppress emission of pollutants, but the polymer filters have weak points in heat resistance, chemical resistance, wear resistance, and flame retardancy.

Accordingly, in order to solve this problem, the ceramic filter has been developed. The ceramic filter has heat resistance, chemical resistance, and wear resistance more excellent than the polymer filter and specifically, the heat resistance of the ceramic filter is excellent so that there is no need to separately install a cooling device in an exhaust device, thereby saving installation cost and maintenance cost.

The membrane filtration process using a nanofiltration membrane (NF) is getting attention as an advanced water purification process because it may maintain a relatively high membrane permeable flux compared to the reverse osmosis (RO) membrane filtration process and has an advantage of removing even low-molecular-weight organic material.

A filtration membrane material which is mainly used for the nanofiltration membrane (NF) process is formed of polymer which is relatively cheap and is easily fabricated, but is vulnerable to high temperature and organic solvent. In order to overcome this problem, recently, research and technology development are actively being conducted in Japan, mainly, on ceramic nanofiltration membrane formed of an inorganic material which has excellent heat resistance, chemical resistance, and pressure resistance and is used semi-permanently, with various materials, such as Al₂O₃, TiO₂, or ZrO₂. However, currently, the ceramic membrane remains at a level of microfiltration/ultrafiltration and ceramic nanofiltration technique has not been developed much. Specifically, the domestic ceramic nanofiltration technique does not exist.

In the meantime, the ceramic hollow fiber membrane offers superior and cost-effective performance in fluid filtration applications. Inherently chemically inert ceramics are excellent materials for process applications where the existing polymer membranes are unsuitable due to high pressure, high temperature, or extreme pH. The ceramic hollow fiber membrane prevents bacteria and other impurities from sticking to the membrane surface, extending the life of the filtration system and lowering the total cost of ownership. Ceramic hollow fiber membranes are widely used in industries, such as biotechnology, chemical treatment, water treatment, and wastewater treatment, pharmaceuticals, and food and beverage treatment.

However, in order to provide a ceramic hollow fiber membrane which further improves filtration performance and removal performance and is used for an advanced water purification process, studies are required for not only a material, a size, and a structure of the ceramic hollow fiber membrane, but also a coating layer appropriately coated on the ceramic hollow fiber membrane.

The related arts of the technical field as described above are as follows:

Korean Registered Patent No. 10-2641726 (registered on February 23, 2024) discloses a hollow ceramic fiber membrane for water treatment, a water treatment module, and a manufacturing method of a ceramic hollow fiber membrane for water treatment and specifically, discloses a hollow ceramic fiber membrane for water treatment which includes a hollow tubular ceramic support with pores, and a coating layer which includes activated carbon particles and is disposed on an outer peripheral surface of the ceramic support.

However, the above-mentioned related art uses the activated carbon particles as the coating layer, but does not teach or imply a nano graphite coating layer with the excellent filtration performance and removal performance with a low coating cost, like the present disclosure.

Further, Korean Registered Patent No. 10-2427811 (registered on July 27, 2022) discloses a surface modified ceramic hollow fiber membrane, a membrane contactor including the same, and a preparing method thereof and specifically, discloses a surface modified ceramic hollow membrane including a hydrophilic ceramic hollow fiber membrane including a hydrophilic inorganic material and a hydrophobic surface modified layer which is formed on a surface of the hydrophilic ceramic hollow fiber membrane and includes a hydrophobic material, a membrane contactor including the same, and a preparing method thereof.

The above-mentioned related art includes a hydrophobic surface modified layer as a coating layer, but does not teach or imply a nano graphite coating layer with the excellent filtration performance and removal performance with a low coating cost, like the present disclosure. Further, the above-mentioned related art discloses only the treatment of high temperature exhaust gas, but does not teach or imply a ceramic hollow fiber membrane which is used for an advanced water purification process of the present disclosure.

### [Related Art Document]

### [Patent Document]

Korean Registered Patent Publication No. 10-2623644 (Published on January 8, 2024)
Korean Registered Patent Publication No. 10-2507633 (Published on March 3, 2023)

### SUMMARY

An object of the present disclosure is to provide a coated ceramic hollow fiber membrane which maintains a filtration performance improved as compared with a ceramic hollow fiber membrane for water treatment which is not coated and is used for an advanced water purification process with an excellent removal performance, and a method for preparing the same.

Further, an object of the present disclosure is to provide a water treatment module having a coated ceramic hollow fiber membrane of the present disclosure.

In the meantime, technical objects to be achieved by the present disclosure are not limited to the aforementioned technical objects, and another not-mentioned technical object will be obviously understood by those skilled in the art from the description below.

In order to achieve the object, according to an aspect of the present disclosure, a coated ceramic hollow fiber membrane includes a hollow tubular ceramic support with pores; and a coating layer disposed on an outer peripheral surface of the ceramic support and the coating layer is a nano graphite coating layer coated with a nano graphite which is a surface modified nano material.

According to a desirable implementation example of one aspect of the present disclosure, the ceramic support includes at least one of alumina (Al₂O₃), titania (TiO₂), zirconia (ZrO₂), and silicon carbide (SiC).

According to a desirable implementation example of one aspect of the present disclosure, a pore size of the ceramic support is 0.01 µm to 2 µm.

According to a desirable implementation example of one aspect of the present disclosure, a size of the nano graphite is 20 nm to 200 nm and the thickness of the coating layer is 50 µm to 200 µm

According to another aspect of the present disclosure, a water treatment module includes a hollow fiber membrane module including at least one ceramic hollow fiber membrane of the present disclosure, a housing in which the hollow fiber membrane module is disposed; and an inlet and an outlet which are formed to be spaced apart from each other in the housing.

According to still another aspect of the present disclosure, a method for preparing a ceramic hollow fiber membrane for water treatment includes a step (a first step) of providing a hollow tubular ceramic support with pores formed therein; and a step (a second step) of forming a coating layer on an outer peripheral surface of the ceramic support. Here, the second step includes: preparing a nano graphite solution by dispersing a nano graphite which is a surface-modified nano material in a solvent; coating the nano graphite solution on an outer peripheral surface of the ceramic support; and drying it.

According to a desirable implementation example of still another aspect of the present disclosure, in the second step, a concentration of the nano graphite solution is desirably 25 mg/L to 1000 mg/L.

According to a desirable implementation example of still another aspect of the present disclosure, in the second step, the coating is performed by at least one of deep coating, spray coating, and a pressure filtration coating.

According to a desirable implementation example of still another aspect of the present disclosure, the thickness of the coating layer dried in the second step is 50 µm to 200 µm.

According to the present disclosure, a ceramic hollow fiber membrane for water treatment coated with a nano graphite which is a surface-modified nano material forms a nano graphite coating layer to have a lower decline rate of a filtration amount to continuously maintain the filtration performance. Further, as compared with an un-coated ceramic hollow fiber membrane, an ion removal performance, for example, a fluoride removal performance is more excellent, and the coating cost is low to have an economical coating layer. Therefore, a ceramic hollow fiber membrane for water treatment which is coated with a nano graphite having excellent filtration performance may be provided.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a view schematically illustrating a coating and filtration experiment of a hollow fiber membrane of Example 1 of the present disclosure;
FIG. 2 is a view illustrating a photograph and a specification of a hollow fiber membrane used for Example 1 of the present disclosure and a filtration system including the same;
FIG. 3 is a photograph and a graph illustrating a coating solution and a coating volume of Example 1 of the present disclosure;
FIG. 4 is a photograph illustrating whether a hollow fiber membrane of Example 1 of the present disclosure is coated;
FIG. 5A is a flowchart schematically illustrating a step of measuring a filtration decline rate of ultrapure water before and after coating of Experimental Example 1 of the present disclosure;
FIG. 5B is a graph illustrating a filtration decline rate of ultrapure water before and after coating of Experimental Example 1 of the present disclosure;
FIG. 6A is a flowchart schematically illustrating a step of measuring a high concentration fluoride waste water filtration amount of ultrapure water before and after coating of Experimental Example 1 of the present disclosure;
FIG. 6B is a graph illustrating a decline rate of an amount of filtrated high concentration fluoride waste water before and after coating of Experimental Example 1 of the present disclosure;
FIG. 7 is a graph illustrating a removal performance of high concentration fluoride waste water before and after coating of Experimental Example 1 of the present disclosure; and
FIG. 8 is a graph for comparing a mass, a solution volume, and a unit price of a coating material coated on a hollow fiber membrane of the present disclosure.

### DETAILED DESCRIPTION OF THE EMBODIMENT

Hereinafter, the exemplary embodiment of the present disclosure will be described with reference to the accompanying drawings and exemplary embodiments as follows. Scales of components illustrated in the accompanying drawings are different from the real scales for the purpose of description, so that the scales are not limited to those illustrated in the drawings.

Unless defined otherwise, all technical and scientific terms used in the present disclosure have the same meaning as commonly understood by those skilled in the art to which the present invention belongs. In general, the nomenclature used in the present disclosure is well known and commonly used in the art.

In the specification of the present disclosure, unless explicitly described to the contrary, the word "comprise" and variations such as "comprises" or "comprising", will be understood to imply the inclusion of stated elements but not the exclusion of any other elements.

Hereinafter, the present disclosure will be described in detail.

One aspect of the present disclosure provides a ceramic hollow fiber membrane coated with a nano graphite which is a surface-modified nano material.

Specifically, the ceramic hollow fiber membrane of the present disclosure includes: a hollow tubular ceramic support with pores; and

a coating layer disposed on an outer peripheral surface of the ceramic support and

the coating layer is a nano graphite coating layer coated with a nano graphite which is a surface modified nano material.

As a first component of the ceramic hollow fiber membrane of the present disclosure, the ceramic support includes a hollow tubular ceramic support with pores formed therein.

The ceramic support forms an overall exterior appearance of the ceramic hollow fiber membrane according to one aspect of the present disclosure. The ceramic support may impart rigidity to the ceramic hollow fiber membrane of the present disclosure.

The ceramic support is formed as a hollow tube. That is, the ceramic support may have a cylindrical shape with a hollow therein. The hollow may be formed to extend to one end and the other end which are opposite to each other in one direction of the ceramic support. A water to be treated may be introduced in the ceramic support through at least one of one end and the other end of the hollow.

The ceramic support may include at least one of alumina (Al₂O₃), titania (TiO₂), zirconia (ZrO₂), and silicon carbide (SiC). For example, the ceramic support may be configured by at least one of alumina (Al₂O₃), titania (TiO₂), zirconia (ZrO₂), and silicon carbide (SiC), but the scope of the present disclosure is not limited thereto.

The pore size may be 0.01 µm to 2 µm which is a level of microfiltration (MF) and ultrafiltration (UF). If the pore size is smaller than 0.01 µm, a pressure for treatment of the water to be treated is significantly increased and a water treatment speed may be lowered. If the pore size exceeds 2 µm, the rigidity of the ceramic support may be degraded. In the meantime, in the present disclosure, the pore size may refer to a diameter of the pore. The diameter of the pore is obtained by selecting any one of pores illustrated on a scanning electron microscope (SEM) image for a cross section of the ceramic support, measuring a diameter of the pore at least three times at points spaced apart from each other, and then calculating the average of the values. Alternatively, sizes of three or more pores illustrated in the image are measured by the above-described method and an average of the numbers of measured pores is calculated.

Further, a second component of the ceramic hollow fiber membrane of the present disclosure includes a coating layer.

The coating layer is a layer coated with a nano graphite which is a surface modified nano material.

Here, the surface-modified nano material is coated to modify the surface to increase a specific surface and further improve the filtration and removal performances.

Specifically, the nano graphite refers to a nano size graphite and the graphite is a material formed of pure carbon and forms a plate type crystal belonging to the hexagonal crystal system and is black and has a metallic luster.

The nano graphite is a surface modified nano material as described above and has a size of 20 nm to 200 nm, and desirably, 50 nm to 150 nm to perform the above-described function.

Further, the nano graphite coating layer not only improves the filtration and removal performance, but also applies a contaminant blocking function with fine particles formed on the surface.

The nano graphite coating layer of the present disclosure is disposed on the outer peripheral surface of the ceramic support. For example, the coating layer may cover a part of the outer peripheral surface of the ceramic support and as another example, the coating layer may cover the entire outer peripheral surface of the ceramic support. In the present disclosure, if the ceramic support entirely has a cylindrical shape, for example, the outer peripheral surface of the ceramic support may mean a surface of the cylinder excluding two bottom surfaces of the cylinder and an inner peripheral surface which defines the hollow, that is, a side surface of the cylinder.

In the present disclosure, the thickness of the coating layer is desirably 50 µm to 200 µm.

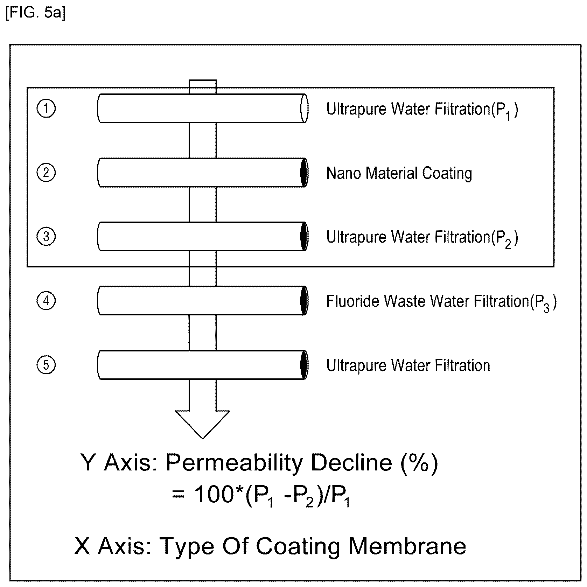

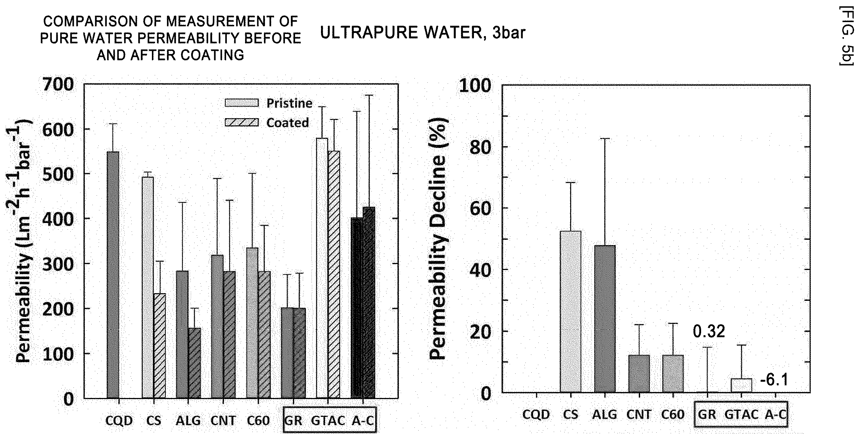

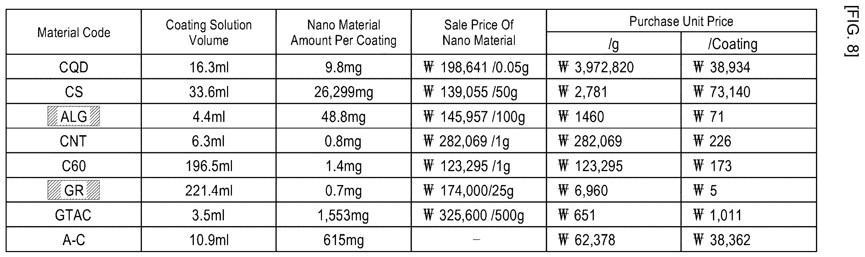

The coating layer is coated on the ceramic hollow fiber membrane so that the filtration amount decline rate is low to continuously maintain the filtration performance. Further, as compared with the uncoated ceramic hollow fiber membrane, an ion removal performance, for example, a fluoride removal performance is more excellent (see FIGS. 5 to 7). Further, the coating cost is much cheaper than the other coating material so that the economical coating layer may be formed (see FIG. 8).

Another aspect of the present disclosure provides a water treatment module including at least one ceramic hollow fiber membrane of the present disclosure.

Specifically, the water treatment module of the present disclosure includes a hollow fiber membrane module including at least one ceramic hollow fiber membrane of the present disclosure, a housing in which the hollow fiber membrane module is disposed; and an inlet and an outlet which are formed to be spaced apart from each other in the housing, and further includes a potting unit.

The housing may form an overall exterior appearance of the water treatment module according to the present disclosure. The housing may include a main body and a cap unit. The hollow fiber membrane module is disposed in the main body of the housing. The housing main body may be formed so as to correspond to a shape of the hollow fiber membrane module so as to accommodate the hollow fiber membrane module therein. The cap unit of the housing may seal the hollow fiber membrane module disposed in the main body together with the main body. The housing cap unit is disposed in at least one of one end and the other end of the hollow fiber membrane module to be coupled to at least one of one end and the other end of the main body.

The inlet and the outlet are formed to be spaced apart from each other. A water to be treated is introduced into the water treatment module of the present disclosure through the inlet and the treated purified water is discharged to the outside from the water treatment module of the present disclosure through the outlet. In the meantime, one or more inlets and one or more outlets are formed if necessary and their functions are interchangeable despite the names. Further, the inlet and the outlet are formed together in the housing main body or any one of them is formed in the housing main body and the other one is formed in the housing cap unit.

The potting unit is disposed in at least one of one end or the other end of the hollow fiber membrane module to support the hollow fiber membrane module.

In the meantime, even though it is not specifically described above, the present disclosure also includes a water treatment device and a water treatment system using a ceramic hollow fiber membrane for water treatment and a water treatment module described above. For example, a fluid connection pipe connected to each of the inlet and the outlet of the water treatment module may be included. As a non-limiting example, the fluid connection pipe may include any one or more of a treatment water supply line, an air injection line, a purified water discharge line, and a concentrated water discharge line.

Still another aspect of the present disclosure provides a method for preparing a ceramic hollow fiber membrane coated with nano graphite.

Specifically, the method includes, a step (a first step) of providing a hollow tubular ceramic support with pores formed therein; and a step (a second step) of forming a coating layer on an outer peripheral surface of the ceramic support.

First, in the first step, the hollow tubular ceramic support on which pores are formed is provided.

The hollow tubular ceramic support on which pores are formed uses a typical hollow tubular ceramic support which is known in the art and is not specifically limited in the present disclosure. Further, the hollow tubular ceramic support of the present disclosure is prepared as follows, as an example.

The first step includes forming a radiation solution including ceramic particles and a polymer resin, decompressing and defoaming the radiating solution, forming a hollow tubular ceramic support green body having pores formed by radiating the defoamed radiating solution, and sintering the ceramic support green body.

Specifically, the radiation solution including ceramic particles and a polymer resin is formed. The radiation solution may additionally include an organic solvent, such as 1-methyl-2-pyrrolidone, triethylphosphate, dimethylformamide, dimethylacetamide, dimethylformaldehyde, dimethylsulfoxide, trimethylphosphate, and a dispersant such as polyvinylpyrrolidone.

The ceramic particles may include alumina (Al₂O₃), titania (TiO₂), zirconia (ZrO₂), and silicon carbide (SiC). A size of the ceramic particle is 0.1 µm or larger and 10 µm or smaller.

The polymer resin may include at least one of polyethersulfone, polysulfone, polyetherimide, polyamide, polyethylene, polypropylene, polyacrylate, polyacrylonitrile, polysulfide, polyketone, polyetherketone, and polyetheretherketone.

In addition, the concentration of the solution and other conditions of the processes may be easily selected by those skilled in the art, but the present disclosure does not specifically limit them.

Next, in the second step, the coating layer is formed on the outer peripheral surface of the ceramic support.

Specifically, the second step includes preparing a nano graphite solution by dispersing nano graphite in the solvent, coating the nano graphite solution on the outer peripheral surface of the ceramic support and drying it.

In the second step, a concentration of the nano graphite solution is desirably 25 mg/L to 1000 mg/L.

A solvent used to prepare the nano graphite solution is desirably an ultrapure water.

The coating method may use various coating methods which are known in the art and desirably use at least one of deep coating, spray coating, and pressure filtration coating.

As an example, when the deep coating is used, one end of the ceramic support is blocked and the ceramic support is vertically dipped in the coating solution using a dip coater.

Next, the coating layer coated on the outer peripheral surface of the ceramic support is dried. The drying may be performed at a temperature of 80°C to 300°C for 1 to 24 hours. At the temperature lower than 80°, the coating layer is insufficiently dried to insufficiently form the coating layer on the outer peripheral surface of the ceramic support and in contrast, and at the temperature exceeding 300°C, there is a problem in that the coating layer is separated from the ceramic support.

Additionally, after the second step, the washing process is additionally performed.

Specifically, when the coating step is completed, the solvent and the isolated impurities remain in the coated coating solution so that the coating layer is unstable. Accordingly, the solvent and the impurities are removed and a hydrothermal treatment step is performed simultaneously to stabilize the coating layer. The washing process is performed using water at the room temperature for 1 to 12 hours, and may be performed for 3 to 8 hours, but is not limited thereto.

Hereinafter, details of the process of the present disclosure will be described with reference to Example and Experimental Example. This is a representative example related to the present disclosure, and it should be understood that the application scope of the present disclosure is not limited thereby.

### <Example 1> Prepare hollow fiber membrane coated with nano graphite

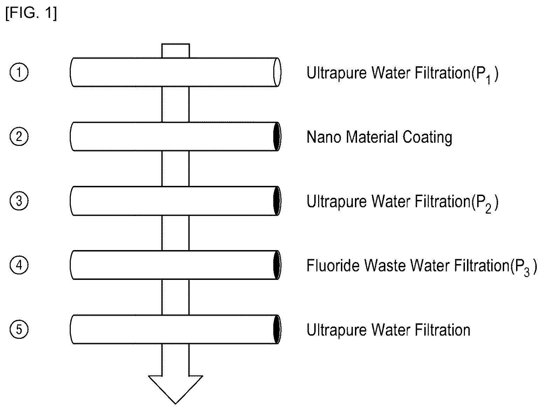

FIG. 1 is a view schematically illustrating a coating and filtration experiment of a hollow fiber membrane of Example 1 and Experimental Example 1 for better understanding.

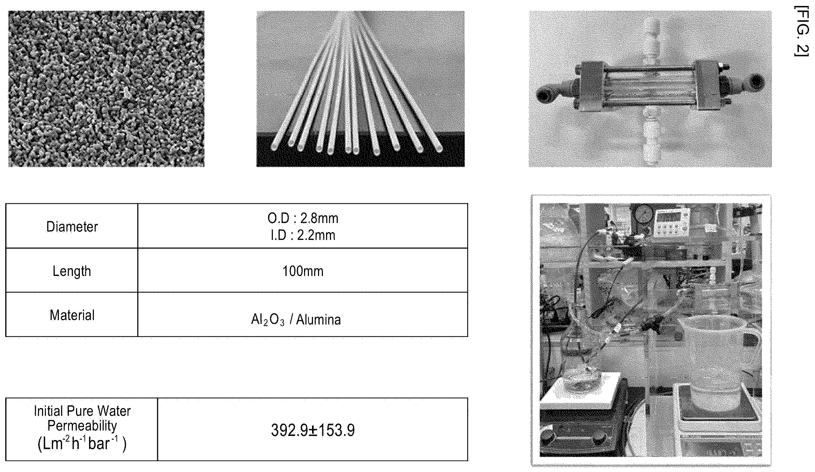

First, the applicant used a hollow fiber membrane and a filtration system from DongKuK R&S. See FIG. 2 for the hollow fiber membrane. Specifically, the hollow fiber membrane used in Example 1 had an outer diameter of 2.8 mm and an inner diameter of 2.2 mm and a length of 100 mm and was prepared from alumina (Al₂O₃). An initial pure water permeability was 392.9±153.9 Lm⁻²h⁻¹ba^{r-1}.

In the meantime, as the coating nano material, nano graphite (4science; M.W.=12.011 Da)(GR) was provided and for comparison, carbon quantum dot (SAT NANO, M.W.=12.011 Da)(CQD), kito acid (Sigma-aldrich; M.W.=1,250,000 Da(=12 nm))(CS), carbon nano tube (Sigma-Aldrich; M.W.=12.01 Da)(CNT), fullerene C60 ((SAT NANO; M.W.=720.64 Da)(C60), glycidyltrimethylammonium chloride (ca.80%)(TCI(SEJIN CI); M.W.=151.63 Da)(GTAC), and alginate + C60(1:1)(Sigma-Aldrich, SAT NANO; M.W.=200,000 Da, M.W.=720.64 Da)(A-C) were used.

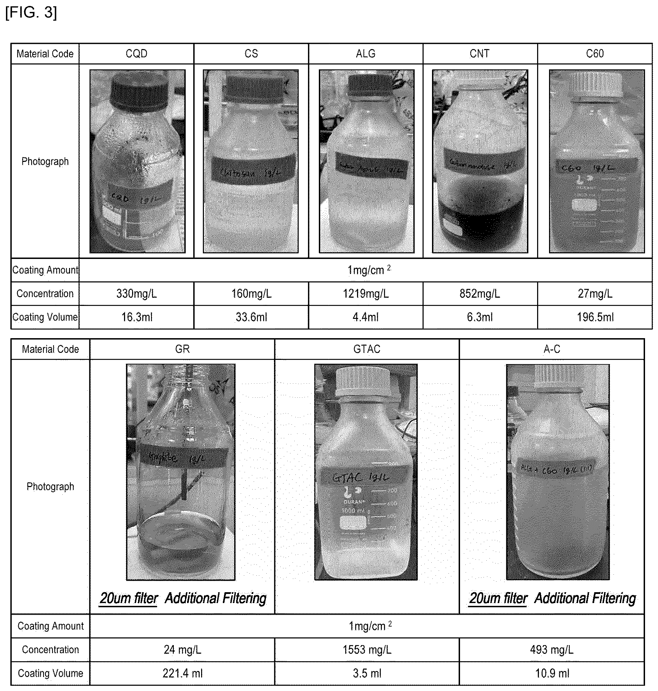

The coating nano material was mixed, ultrasonicated, and centrifuged using ultrapure water as a solvent to prepare a coating solution with a concentration and a coating volume as illustrated in FIG. 3.

This was coated on the outer peripheral surface of the hollow fiber membrane with a coating amount of 1 mg/cm² using the dipping technique and then dried.

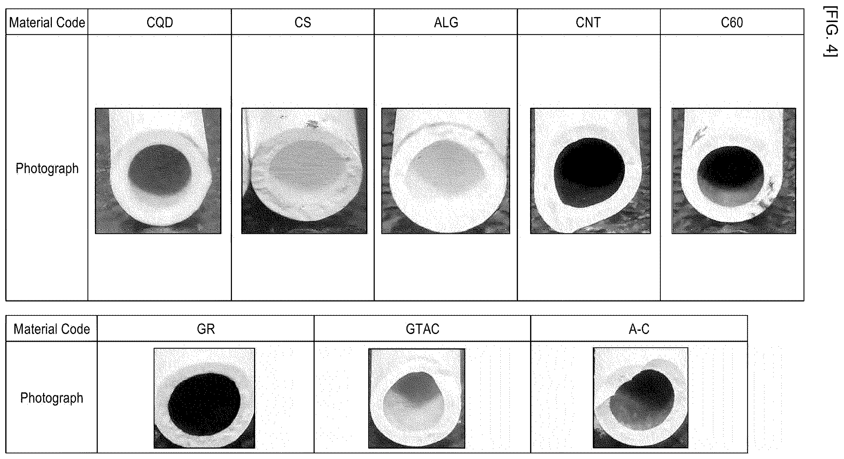

The coated hollow fiber membrane formed as described above is illustrated in FIG. 4.

### <Experimental Example 1> Analysis of characteristic of hollow fiber membrane coated with nano graphite

### (1) Measurement of filtration decline rate of ultrapure water (DI) before and after coating

A filtration system including a coated hollow fiber membrane of Example 1 was used. The permeability was measured according to the following filtration condition before coating and after coating and a filtration decline rate of the ultrapure water after and before coating was calculated as illustrated in FIG. 5A. Here, the filtration conditions were ultrapure water, 3 bar, and 30 minute-filtration.

The result was provided in FIG. 5B.

As seen from FIG. 5B, the filtration decline rate was approximately 0% for the nano graphite coating GR, 50% or more for CS, and less than 20% for CNT, C60, and GTAT. Here, a filtration decline rate of A-C was -6.1%, which was considered as a phenomenon caused when coating was unevenly formed due to interaction between two materials during the mixing process.

### (2) Measurement of decline rate of amount of filtered high concentration fluoride waste water before and after coating

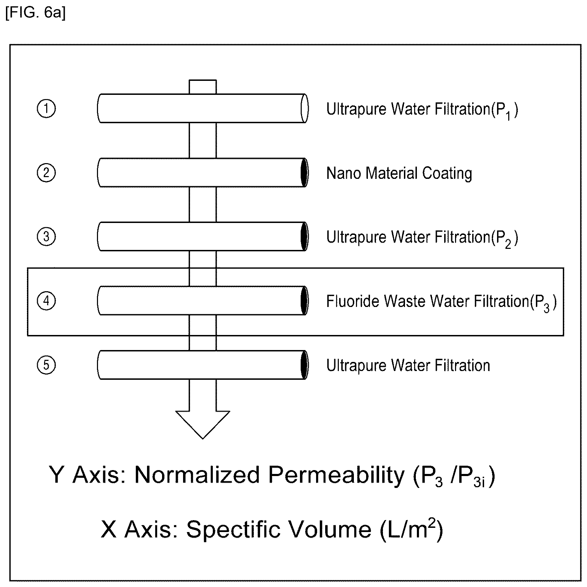

A filtration system including a coated hollow fiber membrane of Example 1 was used. A decline rate of an amount of filtrated high concentration fluoride waste water was measured according to the following filtration condition before coating and after coating and the decline rate of an amount of filtrated high concentration fluoride waste water was calculated as illustrated in FIG. 6A. Here, the filtration conditions were 1000 ppm of NaF, 5 bar, and 200 mL.

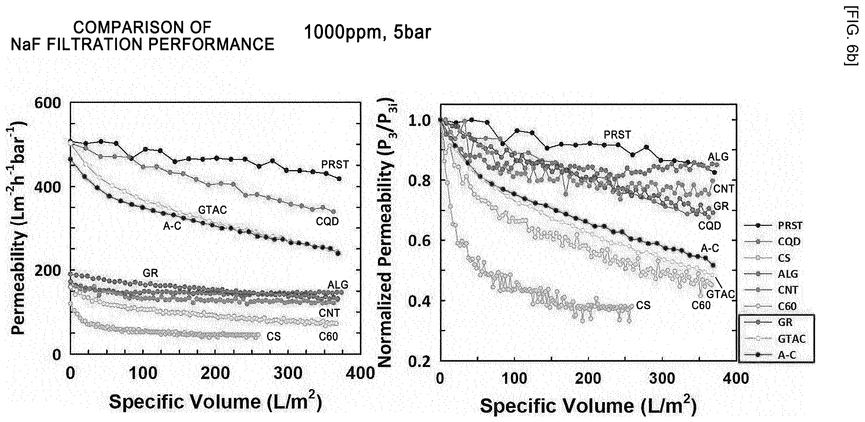

The result was provided in FIG. 6B.

As seen from FIG. 6B, the decline rate of the filtrated amount was CS > C60 > GTAC > A-C > CQD > GR (present disclosure) > CNT > ALG and it is understood that the ceramic hollow fiber membrane having a nano graphite (GR) coating layer of the present disclosure exhibits high permeability to have the lowest decline rate of an amount of filtrated high concentration fluoride waste water so that the filtrated fluorine waste water amount is the best maintained.

### (3) Measurement of removal performance of high concentration fluoride waste water before and after coating

A filtration system including a coated hollow fiber membrane of Example 1 was used. The removal performance of a high concentration fluoride waste water was measured according to the following filtration conditions before coating and after coating. Here, the filtration conditions were 1000 ppm of NaF, 5 bar, and 200 mL.

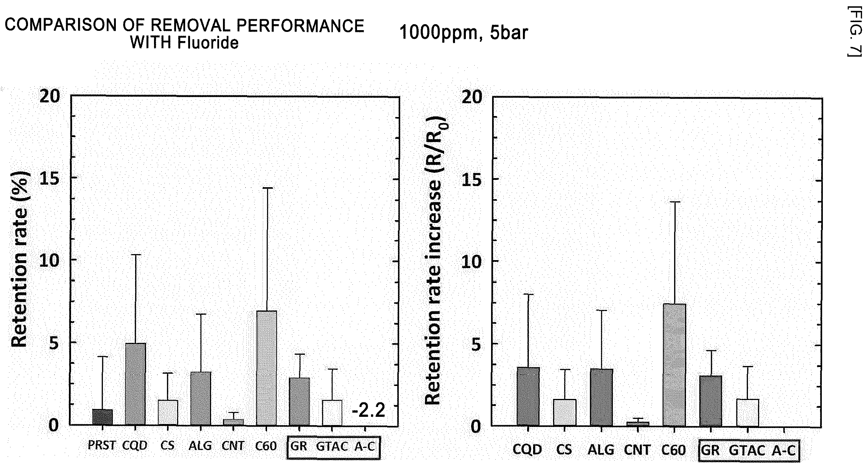

The result was provided in FIG. 7.

As seen from FIG. 7, it was understood that the removal rate of NaF was C60 > CQD > ALG > GR (present disclosure) > GTAC > CS > CNT > A-C and specifically, in the case of the nano graphite coating of the present disclosure, a retention rate (left drawing) of the high concentration fluoride waste water was increased by three to four times as compared to that before coating (PRST) and the retention rate increase was also excellent together with CQD and C60. The result proved that the nano graphite coating of the present disclosure had excellent removal performance of the high concentration fluoride waste water.

This invention was carried out as a part of the National Research and Development Project (Project Unique No. 2710018395, Project No. 00445094) supported by the Ministry of Science and ICT and managed by the National Research Foundation of Korea. This research was supported by the project "Development of Ceramic Membrane Manufacturing Technology Based on Environmental Nanomaterials for Public Safety and Resource Recovery from New Industrial Waste water" of the Original Technology Development Project (Integrated) - Nano-Material Technology Development Project - Nano Future Material Original Technology Development Project (conducted by Ewha Womans University, research period: January 1, 2024 to December 31, 2028).

## Claims

1. A coated ceramic hollow fiber membrane, comprising:
a hollow tubular ceramic support with pores formed therein; and
a coating layer disposed on an outer peripheral surface of the ceramic support,
wherein the coating layer is a nano graphite coating layer coated with a nano graphite which is a surface modified nano material.

2. The coated ceramic hollow fiber membrane according to claim 1, wherein the ceramic support includes at least one of alumina (Al₂O₃), titania (TiO₂), zirconia (ZrO₂), and silicon carbide (SiC).

3. The coated ceramic hollow fiber membrane according to claim 1, wherein a pore size of the ceramic support is 0.01 µm to 2 µm.

4. The coated ceramic hollow fiber membrane according to claim 1, wherein a size of the nano graphite is 20 nm to 200 nm and a thickness of the coating layer is 50 µm to 200 µm.

5. A water treatment module, comprising:
a hollow fiber membrane module including at least one ceramic hollow fiber membrane of claim 1;
a housing in which the hollow fiber membrane module is disposed; and
an inlet and an outlet which are formed to be spaced apart from each other in the housing.

6. A method for preparing a ceramic hollow fiber membrane for water treatment, comprising:
a step (a first step) of providing a hollow tubular ceramic support with pores formed therein; and
a step (a second step) of forming a coating layer on an outer peripheral surface of the ceramic support,
wherein the second step includes:
preparing a nano graphite solution by dispersing a nano graphite which is a surface-modified nano material in a solvent;
coating the nano graphite solution on an outer peripheral surface of the ceramic support; and
drying the nano graphite solution.

7. The method according to claim 6, wherein in the second step, a concentration of the nano graphite solution is 25 mg/L to 1000 mg/L.

8. The method according to claim 6, wherein in the second step, the coating is performed by at least one of deep coating, spray coating, and a pressure filtration coating.

9. The method according to claim 6, wherein a thickness of the coating layer dried in the second step is 50 µm to 200 µm.
